# FASCICULE DE BREVET EUROPEEN

(11) **EP 2 771 547 B1**
(45) Date de publication et mention de la délivrance du brevet: **12.04.2017**
(21) Numéro de dépôt: 12787804.9
(22) Date de dépôt: 23.10.2012
(51) Int. Cl.: F01D 5/28, F01D 9/02, B29L 31/08, B29C 70/24

(54) **PROCEDE DE FABRICATION D'UN SECTEUR DE DISTRIBUTEUR DE TURBINE OU REDRESSEUR DE COMPRESSEUR EN MATERIAU COMPOSITE POUR TURBOMACHINE**
VERFAHREN ZUR HERSTELLUNG EINES TURBINENDÜSEN-LEITSCHAUFELABSCHNITTS ODER EINES KOMPRESSORLEITSCHAUFELABSCHNITTS AUS EINEM VERBUNDWERKSTOFF FÜR EINE TURBOMASCHINE
METHOD FOR MANUFACTURING A TURBINE NOZZLE GUIDE VANES SECTOR OR A COMPRESSOR GUIDE VANES SECTOR FROM COMPOSITE MATERIAL FOR A TURBOMACHINE

(30) Priorité: 25.10.2011 FR 1159668
(43) Date de publication de la demande: 03.09.2014
(73) Titulaire: Safran Ceramics, 33185 Le Haillan (FR); Snecma, 75015 Paris (FR)
(72) Inventeur: FREMONT, Eric, 33700 Merignac (FR); BEAUJARD, Antoine, 94550 Chevilly Larue (FR); NUNEZ, Romain, 33127 Martignas Sur Jalle (FR)
(74) Mandataire: Desormiere, Pierre-Louis
(86) Numéro de dépôt international: PCT/FR2012/052422
(87) Numéro de publication internationale: WO 2013/060977

(56) Documents cités:
- EP-A1- 1 335 113
- WO-A1-2012/001269
- WO-A1-2012/001278
- FR-A1- 2 939 129
- FR-A1- 2 939 130
- FR-A1- 2 943 942
- FR-A1- 2 946 999
- FR-A1- 2 953 885

## Description

### Arrière-plan de l'invention

L'invention se rapporte aux turbines ou compresseurs pour turbomachines, notamment pour turbomoteurs aéronautiques ou turbines industrielles.

L'amélioration des performances des turbomachines et la réduction de leurs émissions polluantes conduit à envisager des températures de fonctionnement de plus en plus élevées.

Pour des éléments de parties chaudes de turbomachines, il a donc été proposé d'utiliser des matériaux composites à matrice céramique (CMC). En effet, ces matériaux possèdent des propriétés thermostructurales remarquables, c'est-à-dire des propriétés mécaniques qui les rendent aptes à constituer des éléments de structure et la capacité à conserver ces propriétés à des températures élevées. De surcroît, les matériaux CMC ont une masse volumique bien inférieure à celle des matériaux métalliques utilisés traditionnellement pour des éléments de parties chaudes de turbomachines.

Ainsi, les documents WO 2010/061140, WO 2010/116066 et WO 2011/080443 décrivent la réalisation d'aubes de roues mobiles de turbomachines en CMC à plate-forme et talon intégrés.

L'utilisation de matériaux CMC pour des distributeurs de turbine a aussi été proposée, notamment dans le document WO 2010/146288. Ce document décrit la réalisation de secteurs de distributeur multi-pales ou mono-pales en CMC par densification d'une préforme fibreuse obtenue par mise en forme d'une ébauche tissée, les secteurs étant ensuite juxtaposés pour former un distributeur complet.

Le document FR 2 946 999 divulgue également un procédé de fabrication d'un secteur de distributeur de turbine ou de redresseur de compresseur pour une turbomachine. Un distributeur de turbine ou redresseur de compresseur métallique traditionnel est formé de plusieurs secteurs assemblés, chaque secteur comprenant une plate-forme intérieure, une plate-forme extérieure et une pluralité de pales s'étendant entre les plates-formes intérieure et extérieure et solidaires de celles-ci. Les plates-formes intérieure et extérieure délimitent la veine d'écoulement de gaz ou d'air dans le distributeur ou redresseur. Du côté extérieur, les plates-formes extérieures des secteurs sont solidaires de pattes permettant le montage du distributeur ou compresseur dans un carter.

### Objet et résumé de l'invention

L'invention a pour but de proposer un procédé permettant de fabriquer un secteur de distributeur de turbine ou redresseur de compresseur en matériau composite reprenant les différentes fonctions d'un secteur métallique, notamment les fonctions de délimitation de veine d'écoulement de gaz ou d'air par des plates-formes intérieure et extérieure et d'accrochage dans un carter.

Ce but est atteint grâce à un procédé comprenant :
(a) la réalisation d'une pluralité d'aubes unitaires mono-pales, chaque aube ayant des plates-formes intérieure et extérieure et une pale s'étendant entre les plates-formes et reliée à celle-ci et étant réalisée par :
   - formation par tissage tridimensionnel d'une ébauche fibreuse sous forme d'une bande et comprenant un premier segment et un deuxième et un troisième segments situés dans le prolongement du premier segment respectivement à une première et une deuxième extrémité longitudinale de celui-ci, chacun des deuxième et troisième segments étant partagé en deux parties de part et d'autre d'une zone de déliaison s'étendant dans l'épaisseur et sur toute la largeur de la bande,
   - formation d'une préforme fibreuse de l'aube à réaliser par déploiement latéral des deux parties du deuxième segment et des deux parties du troisième segment et mise en forme desdites parties, pour obtenir des préformes de plates-formes intérieure et extérieure, et par mise en forme du premier segment pour obtenir une préforme de pale, et
   - densification au moins partielle de la préforme fibreuse par une matrice pour obtenir une aube au moins partiellement densifiée avec plates-formes intérieure et extérieure intégrées, et
(b) assemblage et liaison entre elles d'une pluralité d'aubes au moins partiellement densifiées,
   - la liaison étant réalisée par un processus comprenant au moins une étape choisie parmi : une étape de liaison par brasage et une étape de liaison par co-densification, et
   - la plate-forme intérieure ou extérieure d'une première aube comprenant une partie de plate-forme intérieure ou extérieure de constitution de veine qui est liée à une partie de plate-forme intérieure ou extérieure d'une deuxième aube voisine dans une zone de liaison s'étendant sur une partie au moins de la surface intérieure de la partie de plate-forme intérieure de constitution de veine de la première aube et/ou sur une partie au moins de la surface extérieure de la partie de plate-forme extérieure de constitution de veine de la première aube.

Selon une particularité du procédé,
- on assemble entre elles des aubes mono-pales ayant, au niveau de leur plate-forme extérieure et/ou de leur plate-forme intérieure, et de chaque côté de la pale, une partie unique de plate-forme monofonctionnelle, et
- au niveau de la plate-forme extérieure et/ou de la plate-forme intérieure, une partie unique de plate-forme située d'un premier côté d'une pale est engagée du côté intérieur ou du côté extérieur d'une partie unique de plate-forme située du deuxième côté d'une deuxième pale voisine de la première.

A partir d'aubes mono-pales ayant des éléments de plate-forme uniques monofonctionnels de chaque côté de la pale, on peut ainsi former un secteur ayant une plate-forme extérieure et/ou une plate-forme intérieure bi-fonctionnelle.

Avantageusement, la réalisation de chaque aube comprend une étape de densification partielle de la préforme fibreuse par une matrice, suivie d'une étape d'usinage.

Plusieurs aubes usinées partiellement densifiées peuvent être assemblées et liées entre elles par co-densification. Dans ce cas, pour la réalisation d'un secteur de distributeur ou de redresseur en matériau composite à matrice céramique, on peut prévoir que l'assemblage des aubes usinées partiellement densifiées comprend une étape de collage précéramique.

En variante, pour la réalisation d'un secteur de distributeur ou de redresseur en matériau composite à matrice céramique, la réalisation de chaque aube comprend une première et une deuxième étapes de densification par une matrice céramique séparées par une étape d'usinage et la liaison de plusieurs aubes entre elles comprend une étape de brasage des aubes assemblées après la deuxième étape de densification.

Selon un mode de réalisation, l'une des deux parties du troisième segment de bande fibreuse est déployée et mise en forme pour former une préforme d'une partie de plate-forme extérieure de constitution de veine d'un côté de la préforme de pale et l'autre partie du troisième segment de bande fibreuse est déployée et mise en forme pour former une préforme d'une partie d'un ensemble de pattes d'accrochage de l'autre côté de la préforme de pale, les raccordements à la préforme de pale des préformes de parties de plate-forme extérieure de constitution de veine et d'ensemble de pattes d'accrochage étant mutuellement décalés en direction longitudinale, de sorte que, lors de l'assemblage de deux aubes voisines, une partie de plate-forme extérieure de constitution de veine de l'une des deux aubes s'engage du côté intérieur d'une partie de l'ensemble de pattes d'accrochage de l'autre de deux aubes.

Selon un mode de réalisation, l'une des deux parties du deuxième segment de bande fibreuse est déployée et mise en forme pour former une préforme d'une partie de plate-forme intérieure de constitution de veine d'un côté de la préforme de pale et l'autre partie du deuxième segment de bande fibreuse est déployée et mise en forme pour former une préforme d'une partie d'un ensemble de crochets de l'autre côté de la préforme de pale, les raccordements à la préforme de pale des préformes de parties de plate-forme intérieure de constitution de veine et d'ensemble de crochets étant mutuellement décalés en direction longitudinale, de sorte que, lors de l'assemblage de deux aubes voisines, une partie de plate-forme intérieure de constitution de veine de l'une des deux aubes s'engage du côté extérieur d'une partie d'ensemble de crochets de l'autre des deux aubes.

Selon un mode de réalisation, le procédé comprend l'assemblage et la liaison entre elles de premières aubes mono-pales alternant avec des deuxièmes aubes mono-pales, et :
- la réalisation de chaque première aube comprend le déploiement et la mise en forme des deux parties du troisième segment de bande fibreuse pour former une préforme d'une partie de plate-forme extérieure de constitution de veine de chaque côté de la préforme de pale, et

- la réalisation de chaque deuxième aube comprend le déploiement et la mise en forme des deux parties du troisième segment de bande fibreuse pour former une préforme d'une partie d'ensemble de pattes d'accrochage de chaque côté de la préforme de pale,
- une partie de plate-forme extérieure de constitution de veine d'une première aube étant engagée du côté intérieur d'une partie d'ensemble de pattes d'accrochage d'une deuxième aube lors de l'assemblage des aubes.

Selon un mode de réalisation, le procédé comprend l'assemblage et la liaison entre elles de premières aubes mono-pales alternant avec des deuxièmes aubes mono-pales, et :
- la réalisation de chaque première aube comprend le déploiement et la mise en forme des deux parties du deuxième segment de bande fibreuse pour former une préforme d'une partie de plate-forme intérieure de constitution de veine de chaque côté de la préforme de pale, et
- la réalisation de chaque deuxième aube comprend le déploiement et la mise en forme des deux parties du deuxième segment de bande fibreuse pour former une préforme d'une partie d'ensemble de crochets de chaque côté de la préforme de pale,
- une partie de plate-forme intérieure de constitution de veine d'une première aube étant engagée du côté extérieur d'une partie d'ensemble de crochets d'une deuxième aube lors de l'assemblage des aubes.

Selon un mode de réalisation, le tissage du premier segment de l'ébauche fibreuse est réalisé en ménageant une zone de déliaison interne qui s'étend sur toute la dimension longitudinale du premier segment et qui communique à ses extrémités avec les zones de déliaison du deuxième segment et du troisième segment, et la mise en forme du premier segment comprend la formation d'un passage le long de la zone de déliaison du premier segment pour obtenir une préforme de pale creuse.

L'invention vise aussi une turbine de turbomachine ayant un carter de turbine et un distributeur de turbine en matériau CMC, le distributeur de turbine comprenant des secteurs de distributeur obtenus par un procédé tel que défini ci-avant. Le distributeur est avantageusement monté dans le carter de turbine au moyen de pattes d'accrochage que présentent les plates-formes extérieures d'aubes.

L'invention vise encore un compresseur de turbomachine ayant un carter de compresseur et au moins un redresseur de compresseur en matériau composite, le redresseur de compresseur comprenant des secteurs de redresseur obtenus par un procédé tel que défini ci-avant. Le redresseur est avantageusement monté dans le carter de compresseur au moyen des pattes d'accrochage que présentent des plates-formes extérieures d'aubes.

Avantageusement, le distributeur ou le redresseur supporte un anneau support de matériau abradable par l'intermédiaire des crochets que présentent des plates-formes intérieures d'aubes.

L'invention est remarquable en ce que la fabrication de secteurs de distributeur ou de compresseur en matériau composite à partir d'aubes unitaires mono-pales permet de simplifier la réalisation des préformes fibreuses et leur moulage en comparaison avec une préforme complexe d'un secteur de distributeur ou de redresseur multi-pales.

L'invention est remarquable aussi en ce que l'accrochage du distributeur ou de redresseur dans le carter de turbine ou de compresseur peut être réalisé au moyen de pattes d'accrochage associées à des aubes unitaires, et les efforts exercés sur les pales peuvent être repris par les pattes d'accrochage sans induire d'efforts excessifs au niveau des liaisons entre les aubes.

L'invention vise encore une turbomachine ayant une turbine et/ou un compresseur tels que définis ci-avant.

### Brève description des dessins

L'invention sera mieux comprise à la lecture de la description faite ci-après, à titre indicatif mais non limitatif, en référence aux dessins annexés sur lesquels :
- la figure 1 est une vue très schématique partielle en demi-coupe axiale d'une turbine basse pression de turbomachine comprenant un distributeur de turbine en matériau CMC ;
- la figure 2 est une vue en perspective d'une aube de distributeur mono-pale constitutive d'un secteur de distributeur en matériau CMC, selon un mode de réalisation de l'invention ;
- la figure 3 est une vue très schématique en perspective d'un secteur de distributeur obtenu par assemblage d'aubes telles que celles de la figure 2 ;
- la figure 4 montre très schématiquement le principe d'assemblage de deux aubes telles que celles de la figure 2 lors de la fabrication du secteur de distributeur de la figure 3 ;
- les figures 5 à 7 illustrent très schématiquement des étapes successives d'un procédé de réalisation d'une préforme fibreuse pour une aube de distributeur telle que celle de la figure 2 ;
- la figure 8 indique des étapes successives d'un procédé de fabrication d'un secteur de distributeur tel que celui de la figure 3 ;
- la figure 9 indique des étapes successives d'un autre procédé de fabrication d'un secteur de distributeur tel que celui de la figure 3 ;
- la figure 10 est une vue en perspective de deux aubes de distributeur mono-pales constitutives d'un secteur de distributeur en matériau CMC, selon un autre mode de réalisation de l'invention ;
- la figure 11 est une vue schématique en perspective d'un secteur de distributeur obtenu par assemblage d'aubes telles que celles de la figure 10 ;
- la figure 12 montre très schématiquement le principe d'assemblage de deux aubes telles que celles de la figure 10 lors de la fabrication du secteur de distributeur de la figure 11 ;
- la figure 13 est une vue schématique en perspective d'une aube de distributeur mono-pale constitutive d'un secteur de distributeur en matériau CMC, selon un autre mode de réalisation de l'invention ;
- la figure 14 est une vue très schématique en perspective d'un secteur de distributeur obtenu par assemblage d'aubes telles que celle de la figure 13;
- les figures 15 à 17 illustrent très schématiquement des étapes successives d'un procédé de réalisation d'une préforme fibreuse pour une aube telle que celle de la figure 13 ; et
- la figure 18 est une vue très schématique partielle en demi-coupe axiale d'un compresseur de turbomachine comprenant un redresseur de compresseur en matériau composite.

### Description détaillée de modes de réalisation

### Définitions

Dans tout le texte, on désigne par « plate-forme extérieure » ou « plate-forme intérieure », aussi bien une plate-forme bi-fonctionnelle ayant une partie formant plate-forme de constitution de veine et une partie formant pattes d'accrochage ou crochets ou becquets, qu'une plate-forme monofonctionnelle limitée à l'une de ces parties.

Par « plate-forme de constitution de veine » on désigne un élément formant partie d'une paroi extérieure ou intérieure qui délimite la veine de circulation de gaz dans une turbine au niveau d'un distributeur de turbine ou la veine de circulation d'air dans un compresseur au niveau d'un redresseur de compresseur.

### Application à une turbine de turbomachine

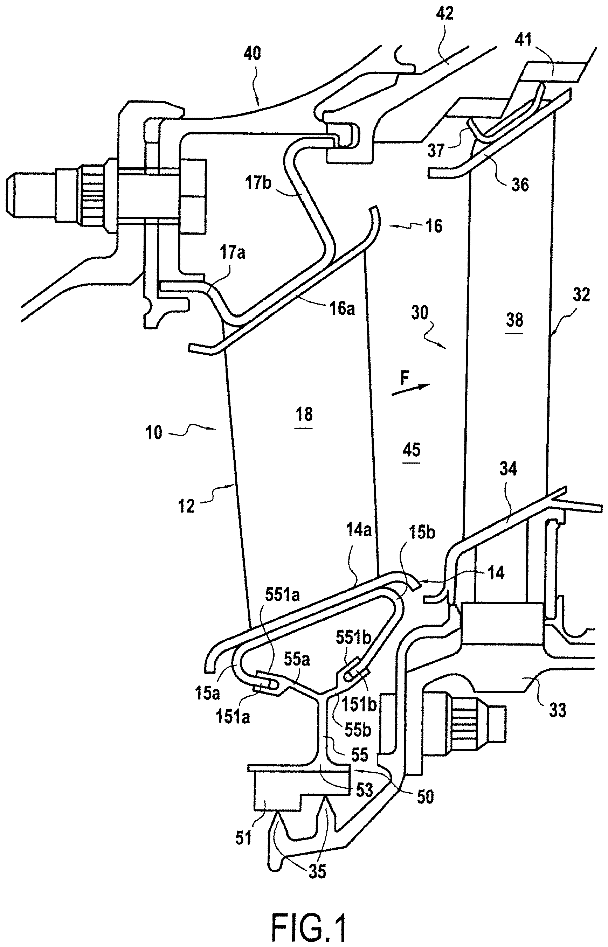

Une turbine basse pression (BP) multi-étages d'une turbomachine, par exemple un turbomoteur aéronautique, telle que montrée partiellement sur la figure 1, comprend une pluralité de distributeurs fixes 10 qui alternent avec des roues mobiles 30 dans le sens d'écoulement du flux gazeux dans la turbine (flèche F) et qui sont montés dans un carter de turbine 40.

Chaque roue mobile 30 comprend une pluralité d'aubes 32 ayant une plate-forme intérieure 34, une plate-forme extérieure ou talon 36 et une pale 38 s'étendant entre les plates-formes 34 et 36 et liée à celles-ci. Du côté intérieur de la plate-forme 34, l'aube se prolonge par un pied engagé dans un logement d'un disque 33. Du côté extérieur, le talon 36 supporte des léchettes 37 en regard d'un matériau abradable 41 porté par un anneau sectorisé 42, pour assurer l'étanchéité aux sommets des aubes 32.

Dans tout le présent texte, les termes "intérieur" et "extérieur" sont utilisés en référence à la position ou orientation par rapport à l'axe de la turbine.

Les aubes 32 peuvent être des aubes métalliques traditionnelles ou des aubes en matériau CMC obtenues par exemple comme décrit dans les documents précités WO 2010/061140, WO 2010/116066 ou WO 2011/080443.

Au moins l'un des distributeurs, tel que le distributeur 10 de la figure 1, est formé par réunion de plusieurs secteurs annulaires de distributeur en matériau CMC.

Chaque secteur de distributeur 12 comprend une plate-forme intérieure 14, une plate-forme extérieure 16 et une pluralité de pales 18 s'étendant entre les plates-formes 14, 16 et solidaires de celles-ci. Les plates-formes 14 et 16 comprennent des parties 14a, 16a formant plates-formes intérieure et extérieure de constitution de veine. Les faces extérieures des plates-formes 14a, 34 et les faces intérieures des plates-formes 16a, 36 délimitent la veine 45 d'écoulement de flux gazeux dans la turbine.

Du côté extérieur, font saillie à partir de la plate-forme extérieure 16a des pattes d'accrochage amont 17a et aval 17b sous forme de secteurs annulaires à section sensiblement en forme de S. Les parties terminales des pattes 17a, 17b sont orientées respectivement vers l'amont et vers l'aval et sont engagées dans des crochets portés par le carter 40 afin de monter le distributeur 10 dans le carter 40 de façon similaire à un distributeur de turbine métallique.

Dans tout le texte, les termes "amont" et "aval" sont utilisés en référence au sens d'écoulement de flux gazeux dans la turbomachine.

Du côté intérieur, font saillie sous la plate-forme intérieure 14a des crochets amont 15a et aval 15b qui sont sous forme de secteurs annulaires à section sensiblement en forme de C, et sont repliés respectivement vers l'aval et vers l'amont.

Les crochets 15a et 15b supportent et maintiennent en position un anneau métallique sectorisé 50 qui supporte un matériau abradable 51 en regard de léchettes 35 portées par le disque 33 pour assurer l'étanchéité de la veine 50 du côté intérieur. L'anneau métallique 50 est formé de secteurs juxtaposés constituant chacun un cartouche d'abradable. Du côté extérieur, chaque secteur de l'anneau 50 comprend une base 53 à partir de laquelle fait saillie vers l'extérieur une partie 55 formant des pattes d'accrochage amont 55a et aval 55b. Les pattes d'accrochage 55a, 55b sont sous forme de secteurs annulaires qui s'étendent ici sur un même angle que les secteurs de l'anneau 50. Dans l'exemple illustré, l'engagement mutuel entre les crochets 15a et les pattes d'accrochage 55a, d'une part, et entre les crochets 15b et les pattes d'accrochage 55b, d'autre part, est réalisé par engagement des parties terminales 151a, 151b des crochets 15a, 15b dans des glissières respectives 551a, 551b formées aux extrémités des pattes d'accrochage 55a, 55b.

### Premier mode de réalisation : aubes à plates-formes bi-fonctionnelles

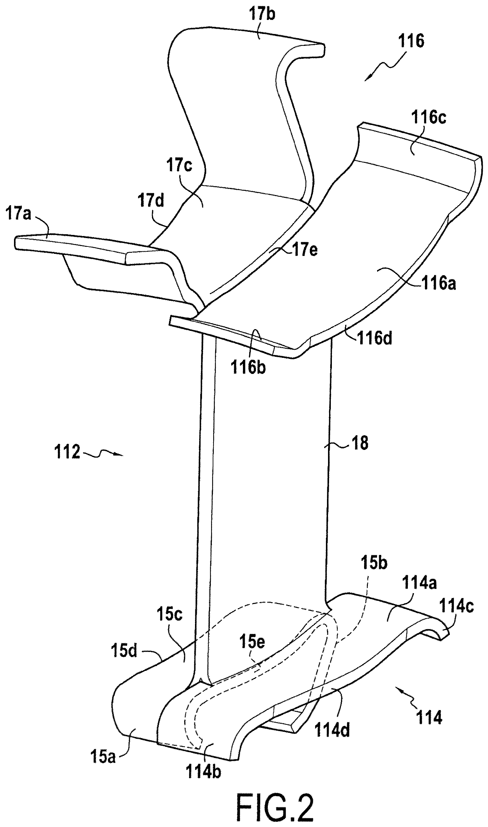

Selon un premier mode de réalisation, les secteurs d'un distributeur tel que le distributeur 12 de la figure 1 sont formés par l'assemblage d'aubes unitaires mono-pales telle que celle 112 de la figure 2. L'aube 112 comprend une plate-forme intérieure 114, une plate-forme extérieure 116 et une pale unique 18 à profil incurvé s'étendant entre les plates-formes 114 et 116 et solidaire de celles-ci.

La plate-forme 114 comprend, d'un côté de la pale 18, par exemple le côté extrados, une partie unique de plate-forme 114a constitutive de plate-forme intérieure de constitution de la veine 45 et, de l'autre côté de la pale 18, une partie unique de plate-forme constitutive de crochets 15a, 15b, tels que ceux de la figure 1. Les crochets 15a, 15b s'étendent vers l'intérieur à partir d'une partie de base 15c. A ses extrémités latérales, la partie de plate-forme de constitution de veine 114a peut présenter des rebords 114b, 114c recourbés vers l'intérieur pour former des becquets qui, en coopération avec des becquets intérieurs de roues mobiles adjacentes, contribuent à l'étanchéité de la veine du côté intérieur (figure 1).

La plate-forme 116 comprend, d'un côté de la pale 18, par exemple le côté extrados, une partie unique de plate-forme 116a constitutive de plate-forme extérieure de constitution de la veine 45 et, de l'autre côté de la pale 18, une partie unique de plate-forme constitutive de pattes d'accrochage 17a, 17b telles que celles de la figure 1. Les pattes d'accrochage 17a, 17b s'étendent vers l'extérieur à partir d'une partie de base 17c. A ses extrémités latérales, la partie de plate-forme de constitution de veine 116a peut présenter des rebords 116b, 116c recourbés vers l'extérieur pour former des becquets.

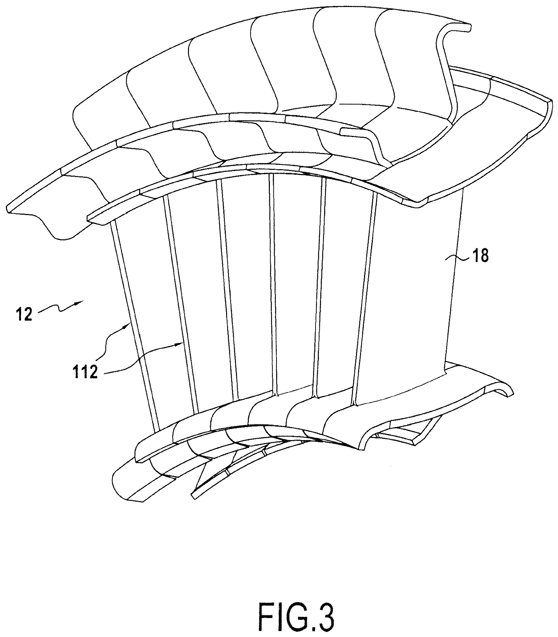

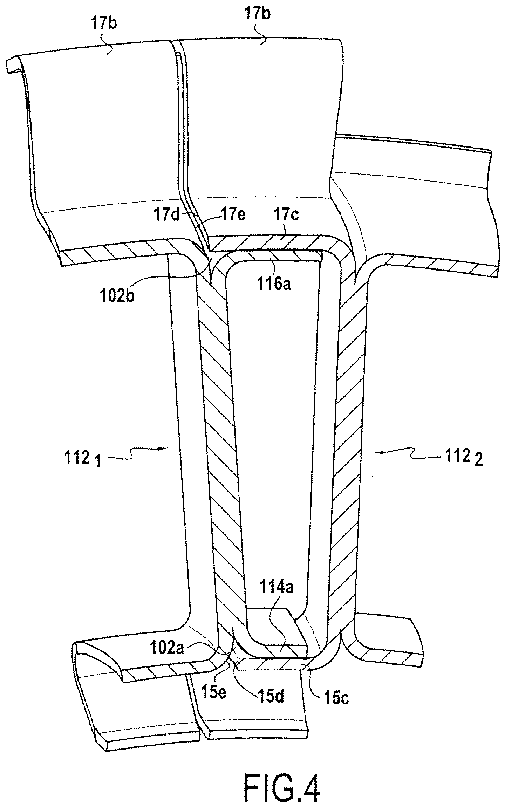

Un secteur de distributeur 12 est formé par l'assemblage d'une pluralité d'aubes 112 avec emboîtement au niveau des plates-formes 114, 116, comme illustré par les figures 3 et 4. Le nombre d'aubes 112 formant le secteur de distributeur 12 est de 6 dans l'exemple illustré. Il pourrait bien entendu être plus élevé ou moins élevé.

L'assemblage des aubes 112 est réalisé en engageant la partie de plate-forme intérieure de constitution de veine 114a d'une première aube 112₁ du côté extérieur de la surface extérieure de la partie de base 15c d'une deuxième aube 112₂ et en engageant la partie de plate-forme extérieure de constitution de veine 116a de la première aube du côté intérieur de la surface intérieure de la partie de base 17c de la deuxième aube (figure 4). L'engagement peut être réalisé pratiquement sans jeu ou avec un jeu contrôlé selon que la liaison entre les aubes est réalisée par co-densification par une matrice céramique ou par brasage, comme décrit plus loin. Les emplacements de raccordement à la pale 18 d'une aube 112 de la partie de plate-forme intérieure de constitution de veine 114a et de la partie de base 15c sont mutuellement décalés à cet effet, de même que les emplacements de raccordement à la pale 18 de la partie de plate-forme extérieure de constitution de veine 116a et de la partie de base 17c. En outre, les bords d'extrémité 114d, 116d des parties de plates-formes de constitution de veine 114a, 116a peuvent être conformés pour correspondre sensiblement au profil incurvé de la face intrados de la pale 18, comme le montre la figure 2. De façon similaire, les bords d'extrémité 15d, 17d des parties de base 15c, 17c peuvent être conformés pour avoir une forme correspondant sensiblement à celle des bords 15e, 17e des parties de base 15c, 17c au niveau du raccordement avec la pale 18, comme le montre la figure 2.

Dans l'exemple illustré par la figure 2, les parties de plates-formes de constitution de veine 114a, 116a s'étendent du côté extrados de la pale 18. En variante, elles pourront être situées du côté intrados ou être situées l'une du côté intrados et l'autre du côté extrados, les crochets 15a, 15b étant toujours situés de l'autre côté de la pale 18 par rapport à la partie de plate-forme 114a et les pattes d'accrochage 17a, 17b étant toujours situées de l'autre côté de la pale 18 par rapport à la partie de plate-forme 116a.

Un mode de réalisation d'une aube 112 telle que celle de la figure 2 sera maintenant décrit.

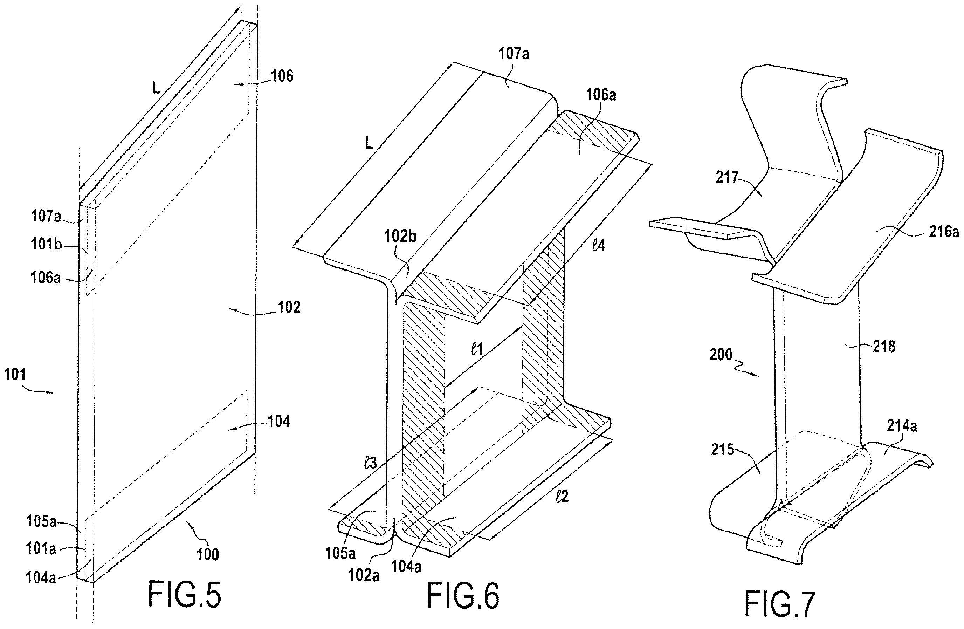

La figure 5 montre très schématiquement une ébauche fibreuse 101 à partir de laquelle une préforme fibreuse d'aube peut être mise en forme afin, après densification par une matrice et usinage éventuel, d'obtenir une aube en matériau CMC telle que l'aube 112.

L'ébauche 101 est obtenue à partir d'une bande 100 tissée par tissage tridimensionnel ou multicouches, la bande 100 s'étendant de façon générale dans une direction X correspondant à la direction longitudinale de l'aube à réaliser. Le tissage est réalisé par exemple avec des fils de chaîne s'étendant dans la direction X, étant noté qu'un tissage avec des fils de trame s'étendant dans cette direction est également possible. Une pluralité d'ébauches 101 peuvent être tissées de façon continue dans la direction X. On peut également tisser simultanément plusieurs rangées parallèles d'ébauches 101.

Une ébauche 101 comprend un premier segment 102 prolongé à ses extrémités longitudinales par un deuxième segment 104 et un troisième segment 106, respectivement. Les segments 102, 104 et 106 (dont seulement les enveloppes sont montrées sur la figure 5), comprennent une pluralité de couches de fils de chaîne.

Dans le segment 102, destiné, après mise en forme, à constituer une préforme de pale, les couches de fils de chaîne sont liées entre elles par des fils de trame d'une pluralité de couches de fils de trame, dans toute l'épaisseur de la bande 100. Différentes armures de tissage peuvent être utilisées, par exemple des armures de type interlock, de type multi-satin ou de type multi-toile. On pourra se référer par exemple au document WO 2006/136755.

Le segment 104 est partagé en deux parties 104a, 105a séparées par une zone de déliaison 101a qui s'étend dans l'épaisseur de la bande 100, et sur toute la largeur de la bande 100. Chacune des parties 104a, 105a comprend plusieurs couches de fils de chaîne liées entre elles par des fils de trame d'une pluralité de couches de fils de trame. On pourra utiliser une même armure de tissage que pour le segment 102, le tissage du segment 104 se distinguant alors de celui du segment 102 par l'absence de fils de trame liant les couches de fils de chaîne adjacentes des parties 104a et 105a. Un tel tissage multicouches avec aménagement de zone de déliaison est bien connu en soi.

De façon similaire au segment 104, le segment 106 est partagé en deux parties 106a, 107a séparées par une zone de déliaison 101b qui s'étend dans l'épaisseur de la bande 100 et sur toute la largeur de la bande 100.

Après tissage et découpe d'une ébauche fibreuse 101 dans la bande 100, la mise en forme de l'ébauche 101 pour obtenir une préforme d'aube comprend le déploiement des parties 104a, 105a de part et d'autre du segment 102 de même que le déploiement des parties 106a, 107a de part et d'autre du segment 102, comme le montre la figure 6.

Les segments 104a et 106a sont destinés à former les préformes des parties de plates-formes 114a et 116a de constitution de veine, respectivement. Le segment 105a est destiné à former la préforme de l'ensemble des crochets 15a, 15b et partie de base 15c. Le segment 107a est destiné à former la préforme de l'ensemble des pattes d'accrochage 17a, 17b et partie de base 17c. Le segment 102 est destiné à former la préforme de la pale 18.

Les fonds des zones de déliaison 101a, 101b au niveau du raccordement avec le segment 102 sont orientés avec une inclinaison non nulle par rapport à un plan normal à la direction X pour respecter la géométrie de l'aube à réaliser, notamment l'orientation des plates-formes de constitution de veine par rapport à la direction longitudinale de la pale.

L'épaisseur de la bande 100 est choisie pour correspondre à la plus grande des épaisseurs de la pale 18, de l'ensemble crochets 15a, 15b et partie de plate-forme 114a et de l'ensemble pattes d'accrochage 17a, 17b et partie de plate-forme 116a.

La largeur L de la bande 100 est choisie pour correspondre à la plus grande des dimensions développées à plat des parties de plates-formes 114a, 116a, ensemble 17a, 17b, 17c et ensemble 15a, 15b, 15c, à savoir dans l'exemple illustré, l'ensemble 17a, 17b, 17c.

Aussi, pour former la préforme de la pale 18, la largeur du segment 102 est réduite par élimination de parties adjacentes aux bords longitudinaux du segment 102 pour ne laisser subsister que la partie de largeur ℓ₁ montrée sur la figure 6, partie dont la largeur correspondant à celle développée à plat de la pale 18. On notera que le tissage par les fils de trame dans le segment 102 pourra être limité à la partie utile, les tronçons de fils de chaîne destinés à être éliminés dans les parties du segment 102 adjacentes aux bords longitudinaux n'étant pas tissés avec des fils de trame.

En outre, pour former la préforme de la partie de plate-forme 114a, la largeur du segment 104a est réduite par élimination de parties s'étendant le long de ses bords latéraux pour ne laisser subsister qu'une partie de largeur ℓ₂ (figure 6) correspondant à la dimension développée à plat de la partie de plate-forme 114a. On procède de façon similaire pour les segments 105a et 106a pour ne laisser subsister que des parties de largeurs ℓ₃ et ℓ₄ correspondant aux dimensions développées à plat de l'ensemble 15a, 15b, 15c et de la partie de plate-forme 116a. Comme pour le segment 102, le tissage avec fils de trame dans les segments 104a, 105a et 106a pourra être limité aux parties non éliminées.

Sur la figure 6, les parties à éliminer de l'ébauche 101 sont hachurées.

La préforme fibreuse 200 de l'aube 112 à réaliser est ensuite obtenue par moulage au moyen d'un outillage de conformation avec déformation de la partie restante du segment 102 pour obtenir le profil de la pale 18 de l'aube, déformation des parties restantes des segments 104 et 106 pour reproduire des formes semblables à celles des parties de plates-formes intérieure et extérieure 114a,116a de constitution de veine, déformation de la partie restante du segment 105a pour reproduire des formes semblables à celles des crochets 15a, 15b et déformation du segment 107a pour obtenir des formes semblables à celles des pattes 117a, 117b. On obtient ainsi (figure 7) une préforme d'aube 200 avec des parties de préformes 214a, 216a pour les parties de plates-formes intérieure et extérieure de constitution de veine, une partie 215 de préforme de crochets 15a, 15b et partie de base 15c, une partie 217 de préforme de pattes d'accrochage 17a, 17b et partie de base 17c, et une partie 218 de préforme de pale.

Du fait de la nature du matériau fibreux qui les compose, les parties déployées 104a, 105a et 106a, 107a des segments 104, 106 se raccordent au segment 102 en formant des arrondis. Les espaces 102a, 102b à section sensiblement triangulaire qui en résultent aux extrémités du segment 102 (figures 4 et 6) pourront éventuellement être comblés par bourrage de fibres, par exemple issues de chutes de fils, ou par des inserts (non représentés).

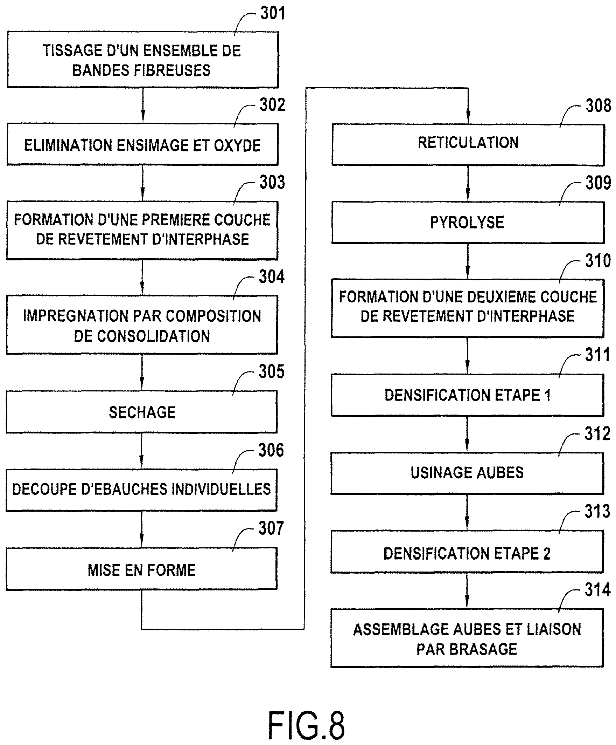

On notera que les étapes de réalisation de la préforme d'aube 200 à partir de l'ébauche 101 peuvent être effectuées avantageusement après traitement des fibres de l'ébauche 101 et imprégnation de celle-ci par une composition de consolidation comme décrit maintenant en référence à la figure 8 qui montre des étapes successives d'un mode de réalisation d'un procédé permettant de fabriquer un secteur de distributeur multi-pales en matériau CMC.

A l'étape 301, une bande fibreuse 100 est tissée par tissage tridimensionnel, comprenant une pluralité d'ébauches fibreuses 101 orientées par exemple en sens chaîne, avec zones de déliaison, comme montré sur la figure 5. On peut utiliser pour le tissage des fils en céramique, notamment des fils à base de carbure de silicium (SiC), par exemple ceux fournis sous la dénomination "Nicalon" par la société japonaise Nippon Carbon. D'autres fils en céramique sont utilisables, notamment des fils en oxyde réfractaire, tels que des fils à base d'alumine Al₂O₃, en particulier pour des matériaux CMC de type oxyde/oxyde (fibre du renfort fibreux et matrice en oxyde réfractaire). On pourrait aussi utiliser des fils de carbone pour un matériau CMC à renfort en carbone.

A l'étape 302, la bande fibreuse est traitée pour éliminer l'ensimage présent sur les fibres et la présence d'oxyde à la surface des fibres. L'ensimage peut être éliminé par traitement thermique et l'oxyde peut être éliminé par traitement acide.

A l'étape 303, une mince couche de revêtement d'interphase de défragilisation est formée sur les fibres de la bande fibreuse par infiltration chimique en phase gazeuse, ou CVI ("Chemical Vapour Infiltration"). Le matériau d'interphase est par exemple du carbone pyrolytique PyC, du nitrure de bore BN ou du carbone dopé au bore BC. L'épaisseur de la couche formée est par exemple comprise entre 10 nanomètres et 100 nanomètres pour conserver une capacité de déformation des ébauches fibreuses.

Des étapes d'élimination d'ensimage, de traitement acide et de formation de revêtement d'interphase sur un substrat en fibres SiC sont décrites dans le document US 5 071 679.

A l'étape 304, la bande fibreuse est ensuite imprégnée par une composition de consolidation, typiquement une résine précurseur de carbone ou une résine précurseur de céramique éventuellement diluée dans un solvant.

Après séchage (étape 305), les ébauches fibreuses individuelles sont découpées (étape 306) comme illustré par la figure 5.

A l'étape 307, une ébauche ainsi découpée est mise en forme (comme illustré par les figures 6 et 7) et placée dans un outillage par exemple en graphite pour conformation des parties de préforme de pale, de préformes de parties de plates-formes intérieure et extérieure de constitution de veine et de préformes de pattes d'accrochage et crochets.

Ensuite, la résine est réticulée (étape 308) puis pyrolysée (étape 309), la réticulation et la pyrolyse pouvant être enchaînées par élévation progressive de la température dans l'outillage.

Après pyrolyse, on obtient une préforme d'aube consolidée par le résidu de pyrolyse. La quantité de résine de consolidation est choisie suffisante mais sans trop d'excès pour que le résidu de pyrolyse lie les fibres de la préforme afin que celle-ci soit manipulable en conservant sa forme sans l'assistance d'un outillage.

Une deuxième couche de revêtement d'interphase de défragilisation est formée par CVI, par exemple en PyC, BN ou BC avec une épaisseur de préférence au moins égale à 100 nanomètres (étape 310). La réalisation d'un revêtement d'interphase en deux couches avant et après consolidation est décrite dans le document EP 2 154 119.

Une densification par matrice céramique de la préforme consolidée est ensuite réalisée par exemple par CVI. La matrice peut être en SiC ou être une matrice autocicatrisante comprenant des phases de matrice en carbure de bore B₄C ou en système ternaire Si-B-C comme décrit notamment dans les documents US 5 246 756 et US 5 965 266. Comme indiqué plus haut, d'autres types de matrice céramique peuvent être envisagés, notamment des matrices en oxyde réfractaire, par exemple en alumine, en particulier pour des matériaux CMC de type oxyde/oxyde. La densification peut alors être réalisée par voie liquide, c'est-à-dire par imprégnation par un précurseur liquide de la matrice céramique avec transformation du précurseur par traitement chimique, ou imprégnation par composition contenant de la poudre céramique, la matrice étant alors obtenue par frittage.

La densification est de préférence réalisée en deux étapes 311, 313 séparées par une étape 312 d'usinage de l'aube à ses dimensions désirées notamment pour obtenir la forme désirée pour les bords d'extrémité 114d, 116d des parties de plates-formes de constitution de veine 114a, 116a et les bords d'extrémité 15d, 17d des parties de base 15c, 17c et éventuellement pour obtenir le profil désiré de l'aube 18. On obtient alors une aube telle que celle 112 de la figure 2.

L'étape suivante 314 consiste à réunir et lier entre elles plusieurs aubes pour former un secteur de distributeur multi-pales en matériau CMC tel que le secteur 12 de la figure 3. Les aubes sont liées en elles par brasage au niveau des recouvrements entre surfaces adjacentes des parties de plates-formes intérieures 114a et extérieures 116a de constitution de veine d'une aube et des parties de base 15c, 17c d'une aube voisine. On obtient alors des liaisons entre aubes dans des zones de liaison qui s'étendent sur une partie au moins de la surface intérieure des parties de plates-formes intérieures de constitution de veine et sur une partie au moins de la surface extérieure des parties de plates-formes extérieures de constitution de veine, l'étendue des zones de liaison assurant un assemblage résistant entre les aubes. La liaison pourra éventuellement être réalisée aussi au niveau des bords d'extrémité profilés 114d, 116d des parties de plates-formes de constitution de veine 114a, 116a et des bords d'extrémité profilés 15d, 17d des parties de base 15c, 17c. Le brasage de pièces en matériau CMC, notamment à matrice SiC, est connu. On pourra se référer par exemple aux documents FR 2 664 518 et FR 2 745 808 dont le contenu est incorporé ici par voie de référence et qui décrivent différentes compositions de brasage à base de nickel et contenant également du titane, du silicium et d'autres métaux éventuels tels que du cuivre ou du chrome.

Après obtention de secteurs de distributeur de turbine en matériau CMC, ceux-ci sont munis de secteurs de l'anneau 50 support d'abradable, comme décrit plus haut.

Un distributeur de turbine complet en matériau CMC portant un anneau support d'abradable est ensuite constitué par le montage des secteurs 12 de distributeur dans le carter de turbine au moyen des pattes d'accrochage 17a, 17b. Le nombre de secteurs formant un distributeur complet est par exemple compris entre 16 et 40.

L'étanchéité inter-secteurs peut éventuellement être renforcée au moyen de languettes disposées à l'interface entre secteurs de distributeur adjacents, comme cela est bien connu dans le cas de secteurs de distributeur métalliques.

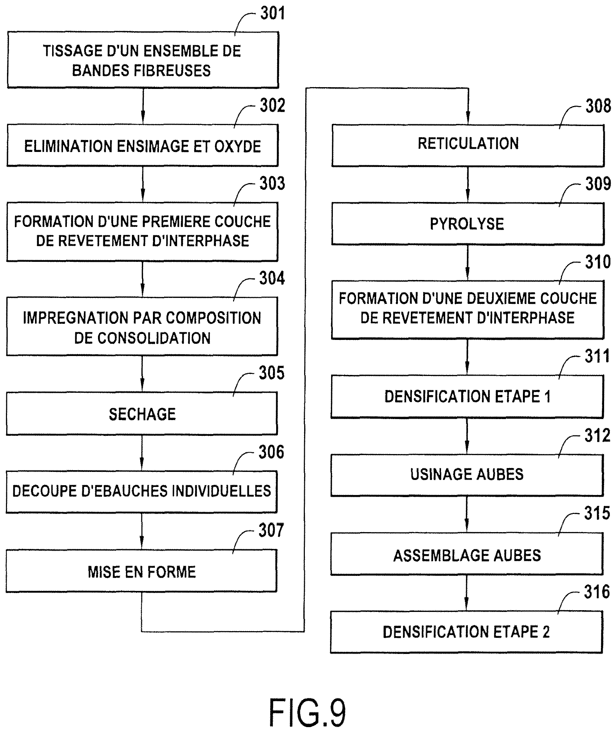

La figure 9 indique des étapes successives d'un autre procédé de fabrication d'un secteur de distributeur de turbine en CMC.

Les étapes 301 à 312 sont identiques à celles du procédé de la figure 8.

Après l'étape d'usinage 312, plusieurs aubes sont maintenues ensemble pour former un secteur de distributeur (étape 315). L'assemblage des aubes peut être réalisé au moyen d'un outillage maintenant les aubes côte-à-côte, et/ou par collage pré-céramique, c'est-à-dire par collage par une résine précurseur de céramique, par exemple une résine polysilane, polysiloxane, polysilazone, polycarbosilane ou silicone, comme connu en soi. Une deuxième étape de densification ou co-densification des aubes assemblées est effectuée (étape 316), similaire à l'étape 313 du procédé de la figure 8 mais réalisée sur un secteur de distributeur complet. Lorsqu'un assemblage par collage pré-céramique a été réalisé, la réticulation et la pyrolyse de la résine pour transformation en céramique peuvent être réalisées lors de la montée en température pour la deuxième étape de densification. La liaison entre aubes peut être réalisée dans les mêmes zones qu'avec le brasage, notamment pour avoir des liaisons entre aubes dans des zones de liaison qui s'étendent sur une partie au moins de la surface intérieure des parties de plates-formes intérieures de constitution de veine et sur une partie au moins de la surface extérieure des parties de plates-formes extérieures de constitution de veine.

### Deuxième mode de réalisation : aubes mono-pales à plates-formes monofonctionnelles alternées

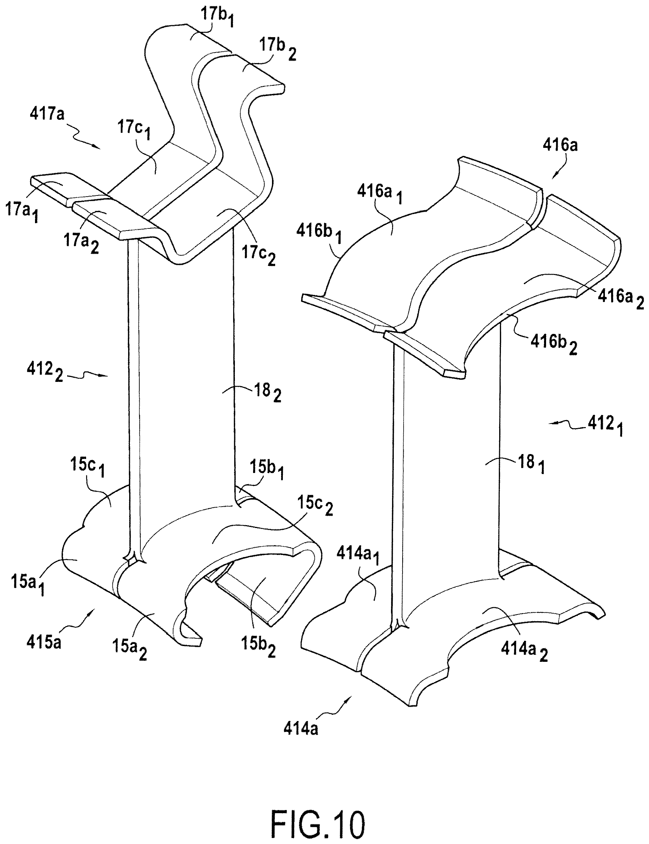

Selon un deuxième mode de réalisation (figure 10), les secteurs de distributeur sont formés par l'assemblage d'aubes mono-pales 412₁ alternant avec des aubes mono-pales 412₂.

Les aubes 412₁ comprennent une pale 18₁ s'étendant entre une plate-forme intérieure 414a et une plate-forme extérieure 416a et solidaire de celles-ci. Les plates-formes 414a et 416a sont limitées à des plates-formes de constitution de veine et s'étendent chacune d'un côté et de l'autre de la pale 18₁ en formant des parties uniques de plate-forme 414a₁, 414a₂ et 416a₁, 416a₂.

Les aubes 412₂ comprennent une pale 18₂ s'étendant entre une plate-forme intérieure 415a et une plate-forme extérieure 417a et solidaire de celles-ci.

La plate-forme intérieure 415a est limitée à deux parties uniques de plate-forme situés respectivement d'un côté et de l'autre de la pale et formant respectivement un ensemble crochet 15a₁, crochet 15b₁ et partie de base 15c₁ reliant les crochets 15a₁ et 15b₁, et un ensemble crochet 15a₂, crochet 15b₂ et partie de base 15c₂ reliant les crochets 15a₂ et 15b₂. Les crochets 15a₁ et 15b₁ et les crochets 15a₂ et 15b₂ s'étendent vers l'intérieur par rapport aux parties de base 15c₁ et 15c₂, respectivement. Les crochets 15a₁ et 15a₂ ont même profil et les crochets 15b₁ et 15b₂ ont même profil. La fonction des crochets 15a₁, 15b₁, 15a₂, 15b₂ est similaire à celle des crochets 15a, 15b de l'aube 112 de la figure 2.

La plate-forme extérieure 417a est limitée à deux parties uniques de plate-forme situés respectivement d'un côté et de l'autre de la pale et formant respectivement un ensemble patte d'accrochage 17a₁, patte d'accrochage 17b₁ et partie de base 17c₁ reliant les pattes d'accrochage 17a₁ et 17b₁, et un ensemble patte d'accrochage 17a₂, patte d'accrochage 17b₂ et partie de base 17c₂ reliant les pattes d'accrochage 17a₂ et 17b₂. Les pattes d'accrochage 17a₁, 17b₁ et les pattes d'accrochage 17a₂ et 17b₂ s'étendent vers l'extérieur par rapport aux parties de base 17c₁ et 17c₂, respectivement. Les pattes d'accrochage 17a₁ et 17a₂ ont même profil et les parties d'accrochage 17b₁ et 17b₂ ont même profil. La fonction des pattes d'accrochage 17a₁, 17b₁, 17a₂, 17b₂ est similaire à celle des pattes d'accrochage 17a, 17b de l'aube 112 de la figure 2.

On notera que la distance entre les plates-formes 415a et 417a dans la direction longitudinale de la pale 18₂ qui les relie est supérieure à la distance entre les plates-formes 414a et 416a dans la direction longitudinale de la pale 18₁ qui les relie.

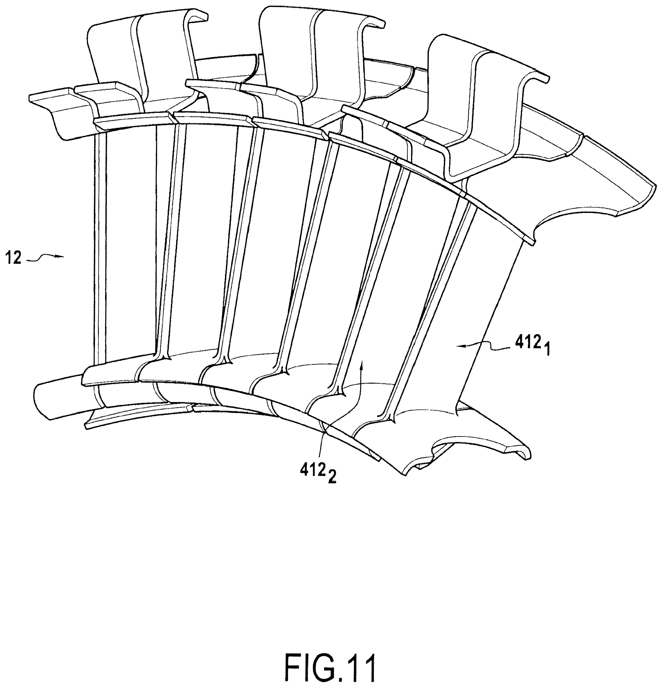

Un secteur de distributeur 12 (figure 11) est formé en assemblant des aubes 412₁ alternativement avec des aubes 412₂.

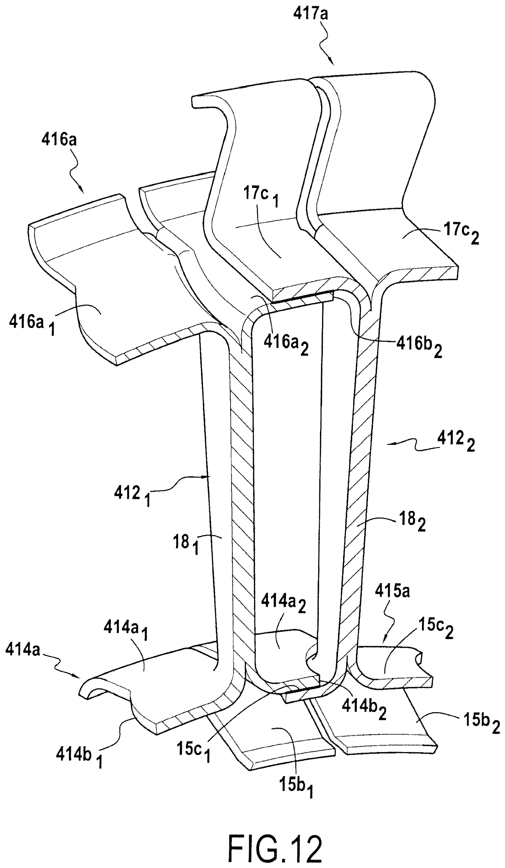

La figure 12 montre très schématiquement deux aubes 412₁ et 412₂.

La partie 414a₂ de la plate-forme intérieure de constitution de veine 414a située du côté de la face intrados de la pale 18₁ de l'aube 412₁ vient au contact ou à proximité de la partie de la base 15c₁ de l'aube 412₂, du côté extérieur, pour liaison mutuelle par co-densification par une matrice ou par brasage (figure 12). Le bord 414b₂ peut être conformé pour épouser sensiblement le profil de la face intrados de la pale 18₂ de l'aube 412₂. La partie 414a₁ de la plate-forme intérieure de constitution de veine 414a située du côté de la face extrados de la pale 18₁ de l'aube 412₁ vient au contact ou à proximité de la partie de base 15c₂ d'une aube 412₂ (non représentée), du côté extérieur, pour liaison mutuelle par co-densification par une matrice ou par brasage.

L'assemblage entre aubes 412₁ et 412₂ est réalisé de façon similaire au niveau de la plate-forme extérieure 416a, celle-ci ayant des bords 416b₁ et 416b₂ qui peuvent être conformés pour correspondre aux profils intrados et extrados de la pale 18₂ d'une aube adjacente 412₂. Ainsi, la partie 416a₂ de la plate-forme extérieure de constitution de veine 416a située du côté de la face intrados de la pale 18₁ de l'aube 412₁ vient au contact ou à proximité de la partie de la base 17c₁ de l'aube 412₂, du côté intérieur, pour liaison mutuelle par co-densification par une matrice ou par brasage, tandis que la partie 416a₁ de la plate-forme extérieure de constitution de veine 416a située du côté de la face extrados de la pale 18₁ de l'aube 412₁ vient au contact ou à proximité de la partie de base 17c₂ d'une aube 412₂ (non représentée), du côté extérieur, pour liaison mutuelle par co-densification par une matrice ou par brasage.

On obtient ainsi des liaisons entre aubes dans des zones de liaison qui s'étendent sur une partie au moins de la surface intérieure des parties de plates-formes intérieures de constitution de veine et sur une partie au moins de la surface extérieure des parties de plates-formes extérieures de constitution de veine.

Les aubes 412₁ et 412₂ sont réalisées chacune par un procédé similaire à celui décrit pour l'aube 112 de la figure 2, c'est-à-dire par réalisation d'une ébauche fibreuse sous forme d'une seule bande tissée avec zones de déliaison aux deux extrémités pour former des préformes des plates-formes 414a, 416a de constitution de veine et pour former des préformes des plates-formes 415a, 417a formant ensembles de crochets et de pattes d'accrochage, par déploiement et mise en forme des parties de l'ébauche situées de part et d'autre des zones de déliaison.

### Troisième mode de réalisation : aubes à plates-formes bi-fonctionnelles et pale creuse

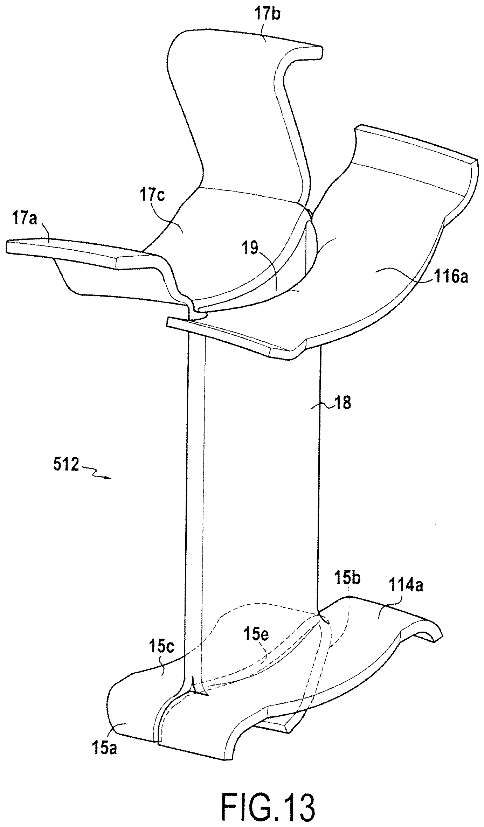

Selon un troisième mode de réalisation, un secteur de distributeur est formé par l'assemblage d'aubes mono-pales 512 telles que celle de la figure 13.

L'aube 512 se distingue de l'aube 112 de la figure 2 en ce que la pale 18 présente sur toute sa longueur un passage interne 19 s'ouvrant à ses extrémités longitudinales. Les autres éléments constitutifs de l'aube 512, à savoir les parties de plates-formes intérieure et extérieure de constitution de veine 114a et 116a, les crochets 15a, 15b de part et d'autre d'une partie de base 15c et les pattes d'accrochage 17a, 17b de part et d'autre d'une partie de base 17c sont similaires à ceux de l'aube 112 de la figure 2 et ne seront pas décrits à nouveau.

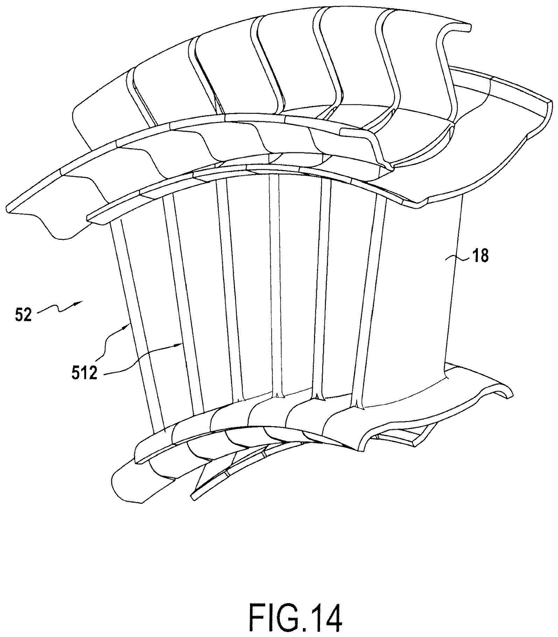

L'assemblage de plusieurs aubes 512 pour former un secteur de distributeur de turbine multi-pales 52 tel qu'illustré par la figure 14 est réalisé de façon similaire à l'assemblage de plusieurs aubes 112 pour former le secteur de distributeur 12 de la figure 3.

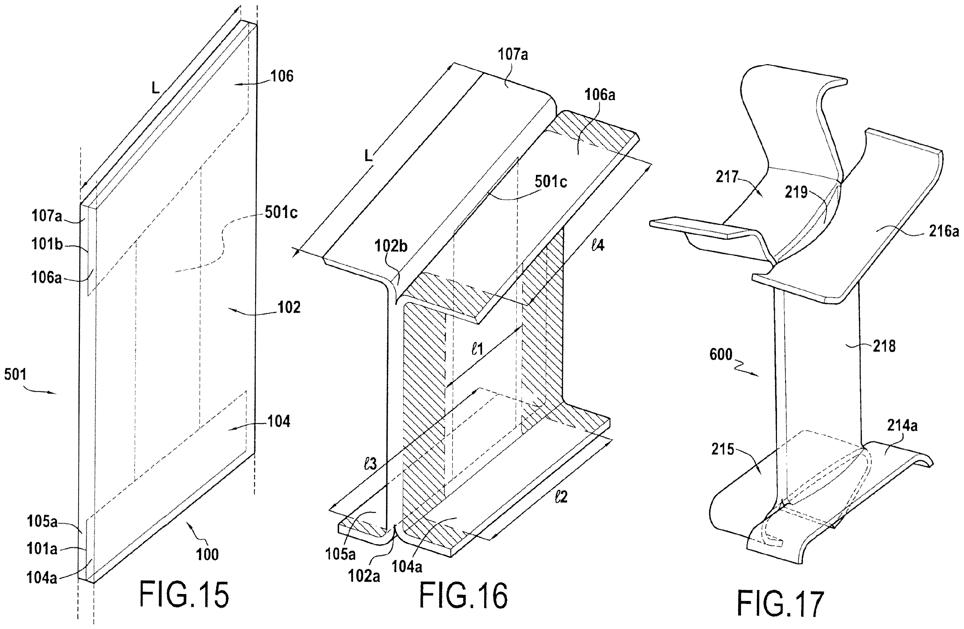

Les figures 15 à 17 illustrent des étapes successives d'un procédé de réalisation d'une préforme fibreuse pour une aube de distributeur telle que l'aube 512. Les éléments des figures 15 à 17 communs avec ceux des figures 5 à 7 portent les mêmes références.

Une ébauche fibreuse 501 (figure 15) est obtenue à partir d'une bande fibreuse 500 tissée par tissage tridimensionnel ou multicouches. L'ébauche 501 comprend un premier segment 502 prolongé à une extrémité longitudinale par un deuxième segment 104 partagé en deux parties 104a, 105a séparées par une zone de déliaison 101a et à l'autre extrémité longitudinale par un troisième segment 106 partagé en deux parties 106a, 107a séparées par une zone de déliaison 101b. Les zones de déliaison 101a, 101b s'étendent dans l'épaisseur de la bande 100, sur toute la largeur de celle-ci.

Le tissage de l'ébauche 501 se distingue de celui de l'ébauche 101 de la figure 5 en ce qu'une zone de déliaison interne 501c est ménagée dans l'épaisseur et sur toute la longueur du segment 502, la zone de déliaison 501c communiquant à ses extrémités longitudinales avec les zones de déliaison 101a et 101b. La zone de déliaison 501c est ménagée dans la partie du segment 502 destiné à former la préforme de la pale 18 afin de pouvoir former le passage interne longitudinal 19 sans pratiquer d'incision.

Comme déjà décrit en référence à la figure 6, la mise en forme de l'ébauche 501 comprend le déploiement des parties 104a, 105a de part et d'autre du segment 512 ainsi que le déploiement similaire des parties 106a, 107a (figure 16). En outre, des parties excédentaires de l'ébauche 501 (parties hachurées sur la figure 16) sont éliminées par découpe.

La préforme 600 de l'aube (figure 17) est obtenue par moulage au moyen d'un outillage de conformation pour obtenir des préformes 214a, 216a de parties de plates-formes intérieure et extérieure de constitution de veine, des préformes 215, 217 pour des ensembles de crochets et des ensembles de pattes d'accrochage et une préforme 218 de pale avec un passage longitudinal interne 219 formé le long de la zone de déliaison 501c par introduction dans celle-ci d'un élément d'outillage.

### Autres modes de réalisation

Dans ce qui précède, est envisagé, du côté intérieur des plates-formes intérieure, la réalisation des crochets pour l'accrochage d'un anneau support d'abradable. A la place de crochets, on pourrait en variante former des becquets.

En outre, les aubes de deuxième mode de réalisation pourront être réalisées avec pale creuse, comme décrit dans le troisième mode de réalisation.

Par ailleurs, les deux modes particuliers de réalisation décrits pourront être combinés en adoptant une configuration bi-fonctionnelle telle que celle du premier mode de réalisation du côté de l'une des plates-formes intérieure et extérieure et une configuration mono-fonctionnelle alternée telle que celle du deuxième mode de réalisation du côté de l'autre plate-forme.

Dans la description détaillée qui précède, est envisagée l'application de l'invention à un distributeur de turbine basse pression. L'invention est toutefois applicable à des distributeurs de turbine en CMC pour des corps de turbine autres qu'un corps basse pression, ainsi qu'à des redresseurs de compresseur en matériau CMC, notamment dans les étages de compresseur exposés en service à des températures élevées.

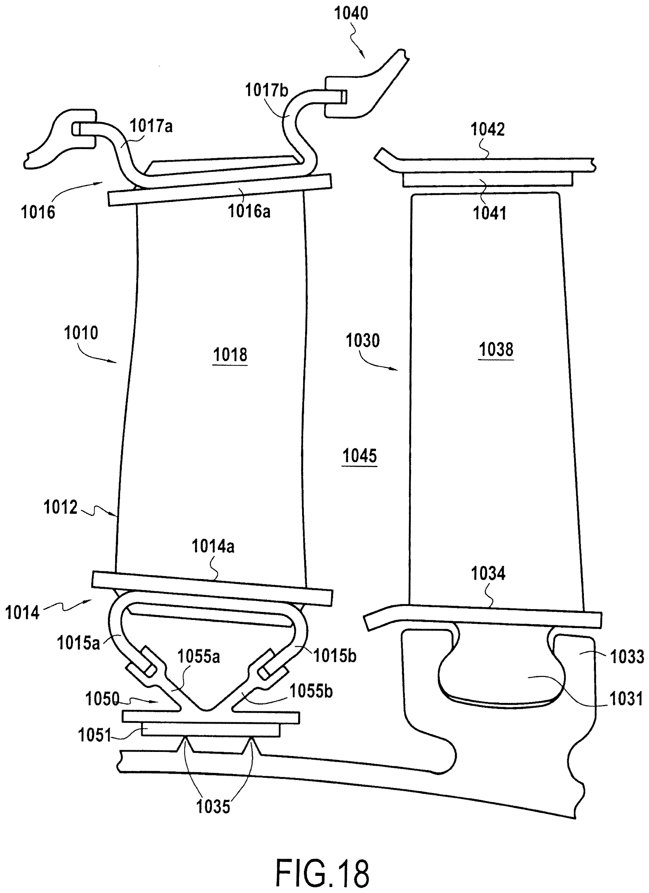

Un compresseur multi-étages de turbomachine, par exemple de turbomoteur aéronautique est montré partiellement et de façon très schématique sur la figure 18. Le compresseur, par exemple un compresseur haute pression, comprend une pluralité de redresseurs fixes 1010 qui alternent avec des roues mobiles 1030 et sont montés dans un carter de compresseur 1040.

Chaque roue mobile 1030 comprend une pluralité d'aubes 1032 ayant une plate-forme intérieure 1034 solidaire d'une pale 1038. Du côté intérieur de la plate-forme intérieure, chaque aube 1032 se prolonge par un pied 1031 engagé dans un logement d'un rotor 1033. A leur extrémité extérieure, les pales 1038 des aubes peuvent présenter des léchettes (non représentées) en regard d'un revêtement abradable 1041 porté par un anneau sectorisé 1042 supporté par le carter de compresseur.

Au moins l'un des redresseurs, par exemple le redresseur 1010 de la figure 18, est réalisé par assemblage de secteurs de distributeur 1012 en matériau CMC.

Chaque secteur de redresseur est formé par assemblage d'aubes unitaire mono-pales et comprend une plate-forme intérieure 1014, une plate-forme extérieure 1016 et des pales 1018 s'étendant entre les plates-formes 1014 et 1016 et solidaires de celles-ci. Les plates-formes 1014 et 1016 comprennent des parties 1014a, 1016a formant plates-formes intérieure et extérieure de constitution de veine.

Les faces extérieures des plates-formes intérieures de constitution de veine 1014a et les faces intérieures des plates-formes extérieures de constitution de veine 1016a délimitent la veine 1045 d'écoulement d'air dans le compresseur au niveau du redresseur 1010.

Du côté intérieur, chaque plate-forme 1014 présente des crochets 1015a, 1015b tandis que, du côté extérieur, chaque plate-forme 1016 présente des pattes d'accrochage 1017a, 1017b.

Les parties terminales des pattes d'accrochage 1017a, 1017b sont engagées dans des crochets portés par le carter 1040 afin de monter les secteurs de redresseurs de carter 1040.

Les crochets 1015a et 1015b supportent et maintiennent en position un anneau métallique sectorisé 1050 qui supporte du côté intérieur un matériau abradable 1051 en regard de léchettes 1035 portées par le disque 1033.

L'anneau métallique 1050 est formé de secteurs juxtaposés s'étendant par exemple sur un même angle que les secteurs de redresseur et constituant chacun une cartouche d'abradable. De la même manière que pour l'anneau 50 de la figure 1, l'anneau 1050 présente du côté extérieur des pattes d'accrochage 1055a, 1055b qui forment à leurs extrémités des glissières dans lesquelles sont engagées sans solidarisation les parties terminales des crochets 1015a, 1015b.

Les aubes mono-pales constituant chaque secteur de redresseur sont réalisées et assemblées entre elles comme décrit plus haut pour les aubes unitaires formant des secteurs de distributeur de turbine.

On a envisagé ci-avant la réalisation d'un redresseur de compresseur en matériau CMC. Lorsque les températures rencontrées en service sont moins élevées, notamment pour les étages amont d'un compresseur, on peut utiliser un matériau composite à matrice organique (CMO) réalisé avec des fibres par exemple de carbone ou de verre et une matrice polymère.

Un secteur de redresseur en matériau CMO est obtenu par assemblage d'aubes mono-pales.

Après tissage d'un ensemble de bandes fibreuses, découpe d'ébauches individuelles et mise en forme au moyen d'un outillage de conformation, comme aux étapes 301, 306 et 307 de procédé de la figure 9, chaque préforme d'aube obtenue maintenue dans son outillage est imprégnée par une résine par injection ou infusion. Un traitement thermique de réticulation de la résine est effectué pour obtenir une préforme d'aube consolidée partiellement densifiée. Après usinage, plusieurs préformes d'aubes consolidées sont assemblées en étant maintenues par un outillage. Les préformes consolidées assemblées sont co-densifiées, la co-densification étant réalisée par au moins un cycle d'imprégnation par une résine et réticulation de celle-ci. Un usinage final peut éventuellement être réalisé. La résine utilisée pour consolidation et co-densification est une résine précurseur de matrice polymère, telle qu'une résine époxyde, bismaléimide ou polyimide, par exemple.

## Revendications

1. Procédé de fabrication d'un secteur de distributeur (12) de turbine ou de redresseur de compresseur pour une turbomachine, comprenant :
(a) la réalisation d'une pluralité d'aubes unitaires mono-pales (112), chaque aube ayant des plates-formes intérieure (114) et extérieure (116) et une pale (18) s'étendant entre les plates-formes et reliée à celle-ci et étant réalisée par :
- formation par tissage tridimensionnel d'une ébauche fibreuse (101) sous forme d'une bande (100) et comprenant un premier segment (102) et un deuxième (104) et un troisième segments (106) situés dans le prolongement du premier segment (102) respectivement à une première et une deuxième extrémité longitudinale de celui-ci, chacun des deuxième et troisième segments (104, 106) étant partagé en deux parties (104a, 105a ; 106a, 107a) de part et d'autre d'une zone de déliaison (101a ; 101b) s'étendant dans l'épaisseur et sur toute la largeur de la bande (100),
- formation d'une préforme fibreuse (200) de l'aube (112) à réaliser par déploiement latéral des deux parties (104a, 105a) du deuxième segment (104) et des deux parties (106a, 107a) du troisième segment (106) et mise en forme desdites parties, pour obtenir des préformes de plates-formes intérieure et extérieure (114a, 116a), et par mise en forme du premier segment (102) pour obtenir une préforme de pale, et
- densification au moins partielle de la préforme fibreuse (200) par une matrice pour obtenir une aube au moins partiellement densifiée avec plates-formes intérieure et extérieure intégrées, et
(b) assemblage et liaison entre elles d'une pluralité d'aubes au moins partiellement densifiées,
- la liaison étant réalisée par un processus comprenant au moins une étape choisie parmi : une étape de liaison par brasage et une étape de liaison par co-densification, et
- la plate-forme intérieure (114) ou extérieure (116) d'une première aube (112₂) comprenant une partie de plate-forme intérieure (114a) ou extérieure (116a) de constitution de veine qui est liée à une partie de plate-forme intérieure (15c) ou extérieure (17c) d'une deuxième aube (112₁) voisine dans une zone de liaison s'étendant sur une partie au moins de la surface intérieure de la partie de plate-forme intérieure (114a) de constitution de veine de la première aube (112₂) et/ou sur une partie au moins de la surface extérieure de la partie de plate-forme extérieure (116a) de constitution de veine de la première aube (112₂).

2. Procédé selon la revendication 1, dans lequel :
- on assemble entre elles des aubes mono-pales (412₁) ayant, au niveau de leur plate-forme extérieure (416a) et/ou de leur plate-forme intérieure (414a), et de chaque côté de la pale (18₁), une partie unique de plate-forme monofonctionnelle (416a₂), et
- au niveau de la plate-forme extérieure et/ou de la plate-forme intérieure, une partie unique de plate-forme (416a₂) située d'un premier côté d'une pale (18₁) est engagée du côté intérieur ou du côté extérieur d'une partie unique de plate-forme (17c₁) située du deuxième côté d'une deuxième pale (18₂) voisine de la première.

3. Procédé selon la revendication 1 ou la revendication 2, dans lequel la réalisation de chaque aube (112) comprend une étape de densification partielle de la préforme fibreuse (200) par une matrice, suivie d'une étape d'usinage.

4. Procédé selon la revendication 3, dans lequel plusieurs aubes usinées partiellement densifiées sont assemblées et liées entre elles par co-densification.

5. Procédé selon la revendication 4, pour la réalisation d'un secteur de distributeur ou de redresseur en matériau composite à matrice céramique, dans lequel l'assemblage des aubes usinées partiellement densifiées comprend une étape de collage pré-céramique.

6. Procédé selon la revendication 3 pour la réalisation d'un secteur de distributeur ou de redresseur en matériau composite à matrice céramique, dans lequel la réalisation de chaque aube comprend une première et une deuxième étapes de densification par une matrice céramique séparées par une étape d'usinage et la liaison de plusieurs aubes entre elles comprend une étape de brasage des aubes assemblées après la deuxième étape de densification.

7. Procédé selon l'une quelconque des revendications 1 à 6, dans lequel l'une (106a) des deux parties du troisième segment (106) de bande fibreuse (100) est déployée et mise en forme pour former une préforme d'une partie de plate-forme extérieure (116a) de constitution de veine d'un côté de la préforme de pale et l'autre partie (107a) du troisième segment (106) de bande fibreuse (100) est déployée et mise en forme pour former une préforme d'une partie d'un ensemble de pattes d'accrochage (17a, 17b) de l'autre côté de la préforme de pale, les raccordements à la préforme de pale des préformes de parties de plate-forme extérieure (116a) de constitution de veine et d'ensemble de pattes d'accrochage (17a, 17b) étant mutuellement décalés en direction longitudinale, de sorte que, lors de l'assemblage de deux aubes voisines (112), une partie de plate-forme extérieure (116a) de constitution de veine de l'une des deux aubes s'engage du côté intérieur d'une partie de l'ensemble de pattes d'accrochage (17a, 17b) de l'autre de deux aubes.

8. Procédé selon l'une quelconque des revendications 1 à 7, dans lequel l'une (104a) des deux parties du deuxième segment (104) de bande fibreuse (100) est déployée et mise en forme pour former une préforme d'une partie de plate-forme intérieure (114a) de constitution de veine d'un côté de la préforme de pale et l'autre partie (105a) du deuxième segment de bande fibreuse (100) est déployée et mise en forme pour former une préforme d'une partie d'un ensemble de crochets (15a, 15b) de l'autre côté de la préforme de pale, les raccordements à la préforme de pale des préformes de parties de plate-forme intérieure (114a) de constitution de veine et d'ensemble de crochets (15a, 15b) étant mutuellement décalés en direction longitudinale, de sorte que, lors de l'assemblage de deux aubes voisines (112), une partie de plate-forme intérieure (114a) de constitution de veine de l'une des deux aubes s'engage du côté extérieur d'une partie d'ensemble de crochets (15a, 15b) de l'autre des deux aubes.

9. Procédé selon l'une quelconque des revendications 1 à 6, comprenant l'assemblage et la liaison entre elles de premières aubes (412₁) mono-pales alternant avec des deuxièmes aubes (412₂) mono-pales, et:
- la réalisation de chaque première aube (412₁) comprend le déploiement et la mise en forme des deux parties du troisième segment de bande fibreuse pour former une préforme d'une partie de plate-forme extérieure (416a) de constitution de veine de chaque côté de la préforme de pale, et
- la réalisation de chaque deuxième aube (412₂) comprend le déploiement et la mise en forme des deux parties du troisième segment de bande fibreuse pour former une préforme d'une partie d'ensemble de pattes d'accrochage (17a₁, 17b₁) de chaque côté de la préforme de pale,
- une partie de plate-forme extérieure (416a) de constitution de veine d'une première aube (412₁) étant engagée du côté intérieur d'une partie d'ensemble de pattes d'accrochage (17a₁, 17b₁) d'une deuxième aube (412₂) lors de l'assemblage des aubes.

10. Procédé selon l'une quelconque des revendications 1 à 6 et 9, comprenant l'assemblage et la liaison entre elles de premières aubes (412₁) mono-pales alternant avec des deuxièmes aubes (412₂) mono-pales, et:
- la réalisation de chaque première aube (412₁) comprend le déploiement et la mise en forme des deux parties du deuxième segment de bande fibreuse pour former une préforme d'une partie de plate-forme intérieure (414a) de constitution de veine de chaque côté de la préforme de pale, et
- la réalisation de chaque deuxième aube (412₂) comprend le déploiement et la mise en forme des deux parties du deuxième segment de bande fibreuse pour former une préforme d'une partie d'ensemble de crochets (15a₁, 15a₂) de chaque côté de la préforme de pale,
- une partie de plate-forme intérieure (414a) de constitution de veine d'une première aube (412₁) étant engagée du côté extérieur d'une partie d'ensemble de crochets (15a₁, 15a₂) d'une deuxième aube lors de l'assemblage des aubes.

11. Procédé selon l'une quelconque des revendications 1 à 10, dans lequel le tissage du premier segment de l'ébauche fibreuse (101) est réalisé en ménageant une zone de déliaison interne qui s'étend sur toute la dimension longitudinale du premier segment (102) et qui communique à ses extrémités avec les zones de déliaison (101a, 101b) du deuxième segment (104) et du troisième segment (106), et la mise en forme du premier segment (102) comprend la formation d'un passage le long de la zone de déliaison du premier segment pour obtenir une préforme de pale creuse.

## Patentansprüche

1. Verfahren zur Herstellung eines Sektors eines Turbinenleitrades (12) oder eines Verdichterleitapparates für eine Turbomaschine, umfassend:
(a) die Herstellung einer Vielzahl von einblättrigen Einheitsschaufeln (112), wobei jede Schaufel eine innere Plattform (114) und eine äußere Plattform (116) und ein Blatt (18), das sich zwischen den Plattformen erstreckt und mit diesen verbunden ist, aufweist und hergestellt ist durch:
- Ausbilden eines Faserrohlings (101) in Form einer Bahn (100) durch dreidimensionales Weben, der ein erstes Segment (102) und ein zweites (104) und ein drittes Segment (106), welche in der Verlängerung des ersten Segments (102) an einem ersten bzw. einem zweiten Längsende dessen gelegen sind, umfasst, wobei ein jedes der zweiten und dritten Segmente (104, 106) in zwei Teile (104a, 105a; 106a, 107a) auf beiden Seiten eines Losbindungsbereiches (101 a; 101 b), welcher sich in der Dicke und über die gesamte Breite der Bahn (100) erstreckt, aufgeteilt ist,
- Ausbilden eines Faservorformlings (200) der herzustellenden Schaufel (112) durch seitliches Entfalten der beiden Teile (104a, 105a) des zweiten Segments (104) und der beiden Teile (106a, 107a) des dritten Segments (106) und Informbringen der Teile, um Vorformlinge von inneren und äußeren Plattformen (114a, 116a) zu erhalten, und durch Informbringen des ersten Segments (102), um einen Blattvorformling zu erhalten, und
- wenigstens teilweises Verdichten des Faservorformlings (200) durch eine Matrix, um eine wenigstens teilweise verdichtete Schaufel mit integrierten inneren und äußeren Plattformen zu erhalten, und
(b) Zusammenfügen und Verbinden untereinander einer Vielzahl von wenigstens teilweise verdichteten Schaufeln,
- wobei das Verbinden mittels eines Prozesses vollzogen wird, der wenigstens einen Schritt ausgewählt aus einem Lötverbindungssschritt und einem Verbindungsschritt durch gemeinsames Verdichten umfasst, und
- wobei die innere (114) oder äußere (116) Plattform einer ersten Schaufel (112₂) einen inneren (114a) oder äußeren (116a) Plattformteil zur Kanalbildung umfasst, der mit einem inneren (15c) oder äußeren (17c) Plattformteil einer benachbarten zweiten Schaufel (112₁) in einem Verbindungsbereich verbunden ist, welcher sich über wenigstens einen Teil der Innenfläche des inneren Plattformteils (114a) zur Kanalbildung der ersten Schaufel (112₂) und/oder über wenigstens einen Teil der Außenfläche des äußeren Plattformteils (116a) zur Kanalbildung der ersten Schaufel (112₂) erstreckt.

2. Verfahren nach Anspruch 1, bei dem:
- einblättrige Schaufeln (412₁) zusammengefügt werden, die im Bereich ihrer äußeren Plattform (416a) und/oder ihrer inneren Plattform (414a) sowie auf jeder Seite des Blattes (18₁) einen einzelnen monofunktionalen Plattformteil (416a₂) aufweisen, und
- im Bereich der äußeren Plattform und/oder der inneren Plattform ein einzelner Plattformteil (416a₂), welcher auf einer ersten Seite eines Blattes (18₁) gelegen ist, auf der Innenseite oder der Außenseite eines einzelnen Plattformteils (17c₁), welcher auf der zweiten Seite eines zu dem ersten benachbarten zweiten Blattes (18₂) gelegen ist, eingebunden wird.

3. Verfahren nach Anspruch 1 oder Anspruch 2, bei dem die Herstellung einer jeden Schaufel (112) einen Schritt zur Teilverdichtung des Faservorformlings (200) durch eine Matrix umfasst, an den sich ein Bearbeitungsschritt anschließt.

4. Verfahren nach Anspruch 3, bei dem mehrere bearbeitete, teilweise verdichtete Schaufeln zusammengefügt und durch gemeinsames Verdichten untereinander verbunden werden.

5. Verfahren nach Anspruch 4, für die Herstellung eines Sektors eines Leitrades oder Leitapparates aus Keramikmatrix-Verbundwerkstoff, bei dem das Zusammenfügen der bearbeiteten, teilweise verdichteten Schaufeln einen vorkeramischen Klebeschritt umfasst.

6. Verfahren nach Anspruch 3, für die Herstellung eines Sektors eines Leitrades oder Leitapparates aus Keramikmatrix-Verbundwerkstoff, bei dem die Herstellung einer jeden Schaufel einen ersten und einen zweiten Schritt zur Verdichtung durch eine Keramikmatrix umfasst, die durch einen Bearbeitungsschritt getrennt sind, und das Verbinden von mehreren Schaufeln untereinander einen Schritt zum Löten der zusammengefügten Schaufeln nach dem zweiten Verdichtungsschritt umfasst.

7. Verfahren nach einem der Ansprüche 1 bis 6, bei dem einer (106a) der beiden Teile des dritten Segments (106) der Faserbahn (100) entfaltet und in Form gebracht wird, um einen Vorformling eines äußeren Plattformteils (116a) zur Kanalbildung auf einer Seite des Blattvorformlings zu bilden, und der andere Teil (107a) des dritten Segments (106) der Faserbahn (100) entfaltet und in Form gebracht wird, um einen Vorformling eines Teils einer Anordnung von Einhaklaschen (17a, 17b) auf der anderen Seite des Blattvorformlings zu bilden, wobei die Anschlüsse der Vorformlinge von äußeren Plattformteilen (116a) zur Kanalbildung und von einer Anordnung von Einhaklaschen (17a, 17b) an dem Blattvorformling gegenseitig in Längsrichtung versetzt sind, so dass beim Zusammenfügen von zwei benachbarten Schaufeln (112) ein äußerer Plattformteil (116a) zur Kanalbildung von einer der beiden Schaufeln auf der Innenseite eines Teils der Anordnung von Einhaklaschen (17a, 17b) der anderen von zwei Schaufeln eingreift.

8. Verfahren nach einem der Ansprüche 1 bis 7, bei dem einer (104a) der beiden Teile des zweiten Segments (104) der Faserbahn (100) entfaltet und in Form gebracht wird, um einen Vorformling eines inneren Plattformteils (114a) zur Kanalbildung auf einer Seite des Blattvorformlings zu bilden, und der andere Teil (105a) des zweiten Segments der Faserbahn (100) entfaltet und in Form gebracht wird, um einen Vorformling eines Teils einer Anordnung von Haken (15a, 15b) auf der anderen Seite des Blattvorformlings zu bilden, wobei die Anschlüsse der Vorformlinge von inneren Plattformteilen (114a) zur Kanalbildung und von einer Anordnung von Haken (15a, 15b) an dem Blattvorformling gegenseitig in Längsrichtung versetzt sind, so dass beim Zusammenfügen von zwei benachbarten Schaufeln (112) ein innerer Plattformteil (114a) zur Kanalbildung von einer der beiden Schaufeln auf der Außenseite eines Teils einer Anordnung von Haken (15a, 15b) der anderen der beiden Schaufeln eingreift.

9. Verfahren nach einem der Ansprüche 1 bis 6, umfassend das Zusammenfügen und das Verbinden untereinander von ersten einblättrigen Schaufeln (412₁), die mit zweiten einblättrigen Schaufeln (412₂) abwechseln, und:
- die Herstellung einer jeden ersten Schaufel (412₁) umfasst das Entfalten und das Informbringen der beiden Teile des dritten Faserbahnsegments, um einen Vorformling eines äußeren Plattformteils (416a) zur Kanalbildung auf jeder Seite des Blattvorformlings zu bilden, und
- die Herstellung einer jeden zweiten Schaufel (412₂) umfasst das Entfalten und das Informbringen der beiden Teile des dritten Faserbahnsegments, um einen Vorformling eines Teils einer Anordnung von Einhaklaschen (17a₁, 17b₁) auf jeder Seite des Blattvorformlings zu bilden,
- wobei ein äußerer Plattformteil (416a) zur Kanalbildung einer ersten Schaufel (412₁) beim Zusammenfügen der Schaufeln auf der Innenseite eines Teils einer Anordnung von Einhaklaschen (17a₁, 17b₁) einer zweiten Schaufel (412₂) eingebunden wird.

10. Verfahren nach einem der Ansprüche 1 bis 6 und 9, umfassend das Zusammenfügen und das Verbinden untereinander von ersten einblättrigen Schaufeln (412₁), die mit zweiten einblättrigen Schaufeln (412₂) abwechseln, und:
- die Herstellung einer jeden ersten Schaufel (412₁) umfasst das Entfalten und das Informbringen der beiden Teile des zweiten Faserbahnsegments, um einen Vorformling eines inneren Plattformteils (414a) zur Kanalbildung auf jeder Seite des Blattvorformlings zu bilden, und
- die Herstellung einer jeden zweiten Schaufel (412₂) umfasst das Entfalten und das Informbringen der beiden Teile des zweiten Faserbahnsegments, um einen Vorformling eines Teils einer Anordnung von Haken (15a₁, 15a₂) auf jeder Seite des Blattvorformlings zu bilden,
- wobei ein innerer Plattformteil (414a) zur Kanalbildung einer ersten Schaufel (412₁) beim Zusammenfügen der Schaufeln auf der Außenseite eines Teils einer Anordnung von Haken (15a₁, 15a₂) einer zweiten Schaufel eingebunden wird.

11. Verfahren nach einem der Ansprüche 1 bis 10, bei dem das Weben des ersten Segments des Faserrohlings (101) unter Ausbilden eines inneren Losbindungsbereiches, der sich über die gesamte Längsabmessung des ersten Segments (102) erstreckt und der an seinen Enden mit den Losbindungsbereichen (101a, 101b) des zweiten Segments (104) und des dritten Segments (106) in Verbindung steht, vollzogen wird und das Informbringen des ersten Segments (102) das Ausbilden eines Durchgangs entlang des Losbindungsbereiches des ersten Segments umfasst, um einen Hohlblattvorformling zu erhalten.

## Claims

1. A method of fabricating a turbine nozzle or a compressor diffuser (12) for a turbine engine, the method comprising:
a) making a plurality of single-airfoil vane units (112), each vane having inner (114) and outer (116) platforms and an airfoil (18) extending between the platforms and connected thereto, and being made by:
• forming a fiber blank (101) by three-dimensional weaving, the blank being in the form of a strip (100) and comprising a first segment (102) with second (104) and third segments (106) extending the first segment (102) at respective first and second longitudinal ends thereof, each of the second and third segments (104, 106) being split into two portions (104a, 105a ; 106a, 107a) on either side of a zone of non-interlinking (101a ; 101b) extending within the thickness and across the entire width of the strip;
• forming a fiber preform (200) for the vane (112) to be made by laterally deploying the two portions (104a, 105a) of the second segment (104) and the two portions (106a, 107a) of the third segment (106) and shaping said portions so as to obtain inner and outer platform preforms (114a, 116a), and by shaping the first segment (102) so as to obtain an airfoil preform; and
• at least partially densifying the fiber preform (200) with a matrix in order to obtain and at least partially densified vane with inner an outer platforms incorporated therein; and
b) assembling and bonding together a plurality of at least partially densified vanes:
• the bonding being performed by a process comprising at least one step selected from: a step of bonding by brazing and a step of bonding by co-densification; and
• the inner (114) or outer (116) platform of a first vane (112₂) comprising an inner (114a) or outer (116a) passage-constituting platform portion that is bonded to an inner (15c) or outer (17c) platform portion of an adjacent second vane (112) in a bonding zone extending over at least a portion of the inside surface of the inner passage-constituting platform (114a) portion of the first vane (112₂) and/or over at least a portion of inner surface of the outer (116a) passage-constituting platform portion of the first vane (112₂).

2. A method according to claim 1, wherein:
• single-airfoil vanes (412₁) are assembled together, each having at its outer (416a) and/or inner (414a) platform and on either side of the airfoil (18₁), a single single-function platform portion (416a₂); and
• at the outer and/or inner platform, a single platform portion (416a₂) situated on a first side of the airfoil (18₁) is engaged on the inside or the outside of a single platform portion (17c₁) situated on the second side of a second vane (18₂) adjacent to the first.

3. A method according to claim 1 or claim 2, wherein the making of each vane (112) includes a step of partially densifying the fiber preform (200) with a matrix, followed by a step of machining.

4. A method according to claim 3, wherein a plurality of partially densified machined vanes are assembled and bonded together by co-densification.

5. A method according to claim 4, for making a nozzle or diffuser sector out of ceramic matrix composite material, wherein assembling together the partially densified machined vanes includes a step of pre-ceramic adhesive bonding.

6. A method according to claim 3, for making a nozzle or diffuser sector out of ceramic matrix composite material, wherein the making of each vane includes first and second steps of densification by means of a ceramic matrix, which steps are separated by a step of machining, and the bonding together of a plurality of vanes includes a step of brazing assembled-together vanes after the second densification step.

7. A method according to any one of claims 1 to 6, wherein one (106a) of the two portions of the third segment (106) of the fiber strip (100) is deployed and shaped in order to form a preform for an outer passage-constituting platform portion (116a) on one side of the airfoil preform and the other portion (107a) of the third segment (106) of the fiber strip (100) is deployed and shaped in order to form a preform for a portion of a set of attachment tabs (17a, 17b) on the other side of the airfoil preform, the preforms for the outer passage-constituting platform portion (116a) and for the set of attachment tabs (17a, 17b) being attached to the airfoil preform at positions that are mutually offset in the longitudinal direction, such that when two adjacent vanes (112) are assembled together a portion of the outer passage-constituting platform portion (116a) of one of the two vanes engages the inside of a portion of the set of attachment tabs (17a, 17b) of the other one of the two vanes.

8. A method according to any one of claims 1 to 7, wherein one (104a) of the two portions of the second fiber strip (100) segment (104) is deployed and shaped in order to form a preform for an inner passage-constituting platform portion (114a) on one side of the airfoil preform, and the other portion (105a) of the second fiber strip (100) segment is deployed and shaped in order to form a preform for a portion of a set of hooks (15a, 15b) on the other side of the vane preform, the preforms for the inner passage-constituting platform portions (114a) and for the set of hooks (15a, 15b) being connected to the airfoil preform at positions that are mutually offset in the longitudinal direction in such a manner that when assembling two adjacent vanes (112) together, an inner passage-constituting platform portion (114a) of one of the two vanes engages on the outside of a portion of a set of hooks (15a, 15b) of the other one of the two vanes.

9. A method according to any one of claims 1 to 6, including assembling and bonding together first single-airfoil vanes (412₁) alternating with second single-airfoil vanes (412₂), and:
• the making of each first vane (412₁) comprises deploying and shaping the two portions of the third fiber strip segment in order to form a preform for an outer passage-constituting platform portion (416a) on either side of the airfoil preform; and
• the making of each second vane (412₂) comprises deploying and shaping the two portions of the third fiber strip segment to form a preform for a set of attachment tabs (17a, 17b) portion on either side of the airfoil preform;
• an outer passage-constituting platform portion (416a) of a first vane (412₁) being engaged on the inside of a set of attachment tabs portion (17a₁, 17b₁) of a second vane (412₂) during assembly of the vane.

10. A method according to any one of claims 1 to 6 and claim 9, including assembly and bonding together first single-airfoil vanes (412₁) in alternation with second single-airfoil vanes (412₂), and:
• the making of each first vane (412₁) comprises deploying and shaping the two portions of the second fiber strip segment to form a preform for an inner passage-constituting platform portion (414a) on either side of the airfoil preform; and
• the making of each second vane (412₂) comprises deploying and shaping the two portions of the second fiber strip segment to form a preform for a set of hooks portion (15a₁, 15a₂) on either side of the airfoil preform;
• an inner passage-constituting platform portion (414a) of a first vane (412₁) being engaged on the outside of a set of hooks portion (15a₁, 15a₂) of a second vane when assembling the vanes together.

11. A method according to any one of claims 1 to 10, wherein the first segment of the fiber blank (101) is woven while leaving an internal zone of non-interlinking that extends over the entire longitudinal dimension of the first segment (102) and that communicates at its ends with the zones of non-interlinking (101a, 101b) in the second segment (104) and in the third segment (106), and the shaping of the first segment (102) includes forming a passage along the zone of non-interlinking in the first segment in order to obtain a hollow airfoil preform.
